# EUROPÄISCHE PATENTSCHRIFT

(11) **EP 1 198 319 B1**
(45) Veröffentlichungstag und Bekanntmachung des Hinweises auf die Patenterteilung: **09.04.2003**
(21) Anmeldenummer: 00931066.5
(22) Anmeldetag: 20.04.2000
(51) Int. Cl.: B23D 23/00, B26D 1/09

(54) **VORRICHTUNG ZUM DURCHTRENNEN VON ZWEI ODER MEHR AUFEINANDERLIEGENDEN STANGEN ODER STREIFEN**
DEVICE FOR CUTTING TWO OR MORE RODS OR STRIPS ARRANGED ONE AFTER THE OTHER
DISPOSITIF PERMETTANT DE SECTIONNER DEUX OU PLUSIEURS TIGES OU BANDES SE TROUVANT LES UNES APRES LES AUTRES

(30) Priorität: 22.07.1999 DE 19933890
(43) Veröffentlichungstag der Anmeldung: 24.04.2002
(73) Patentinhaber: SIEGENIA-AUBI KG, 57234 Wilnsdorf (DE)
(72) Erfinder: GERSDORF, Oliver, D-57578 Birken Honigsessen (DE); LOHMANN, Cord, 26135 Oldenburg (DE); ROTGER STEIGEMANN, Carmen, D-57078 Siegen (DE); SASSMANNSHAUSEN, Jürgen, D-57271 Hilchenbach (DE)
(86) Internationale Anmeldenummer: EP0003589
(87) Internationale Veröffentlichungsnummer: WO01007190

(56) Entgegenhaltungen:
- EP-A- 0 450 363

## Beschreibung

Der Gegenstand der Erfindung betrifft eine Vorrichtung nach dem Oberbegriff des Anspruchs 1.

Eine derartige Vorrichtung ist aus der EP 0 450 363 B1 bekannt. Die Vorrichtung dient dabei hauptsächlich dem Kürzen von Stulpschienen-Treibstangen-Baueinheiten, die im Folgenden allgemein als Treibstangenbeschläge bezeichnet werden. Die Treibstangenbeschläge dienen dabei zur Verrriegelung eines Flügels an einem Rahmen.

Die Treibstangenbeschläge bestehen aus einer ortsfest an dem Flügel anzubringenden Stulpschiene, an der längsbeweglich eine mit Riegelgliedem versehene Treibstange gehalten und geführt ist. Zur Anpassung der Treibstangenbeschläge an unterschiedliche Abmessungen des Flügels oder des Rahmens weisen die Treibstangenbeschläge einen Ablängbereich auf, an dem die Treibstangenbeschläge mittels einer geeigneten Vorrichtung gekürzt werden können.

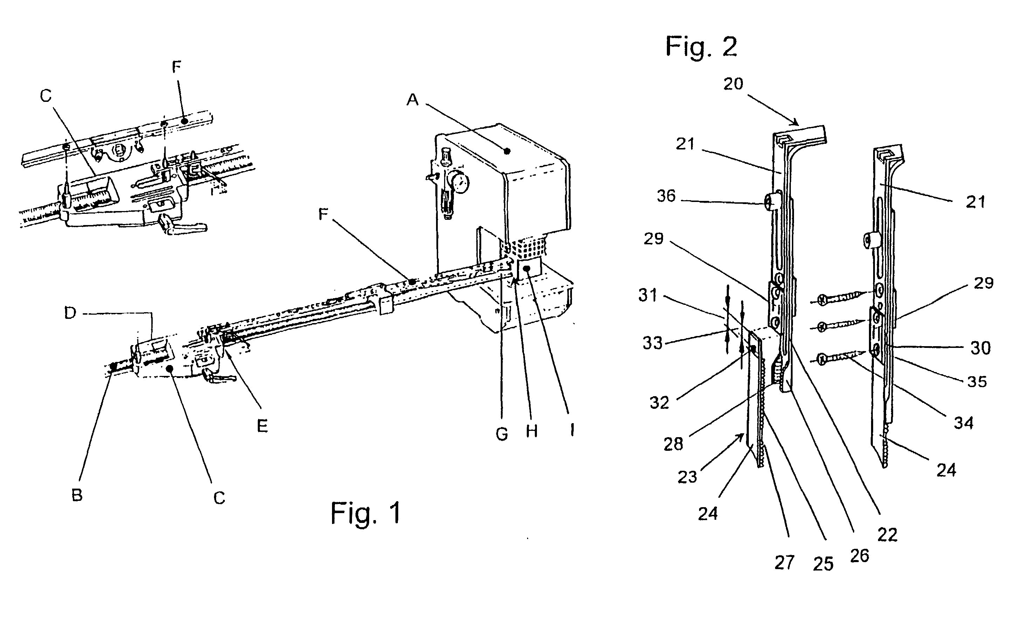

Die Vorrichtung besteht dabei ausweislich der Fig. 1, die der Firmenschrift "Roto - die Baubeschlagtechnik - Ausgabe 1993/94 ; Seite 2.11.13 entnommen ist, aus einer z.B. pneumatisch angetriebenen Stanze A, an der eine Maßskala B befestigt ist. An der Maßskala B ist ein Schieber C verschiebbar angebracht, der eine Anschlagkante D zur Einstellung an der Maßskala B aufweist und an dem eine Aufnahme E zur Anlage eines Treibstangenbeschlagteiles F vorgesehen ist.

Wird der Schieber C - unter Zuhilfenahme der Maßskala B - auf das gewünschte Maß eingestellt, kann ein geeignetes Treibstangenbeschlagteil F an den Schieber angelegt werden und ragt mit einem Ende G in eine Öffnung H eines Werkzeuges bzw. der Vorrichtung I der Stanze A.

Dabei ist an dem Werkzeug I nach der Firmenschrift Roto eine Einrichtung zum Spreizen der Treibstange und der Stulpschiene vorgesehen, so daß diese getrennt voneinander - in unterschiedlichen Längen - abgetrennt werden können. Dies ist notwendig, damit die Stulpschienen über eine z.B. verschiebbare oder verdrehbare Arretierplatte miteinander verbunden werden können. Die Arretierplatten sind an einem der Stulpschienenenden befestigt und weisen Mittel zur Formschußkopplung mit dem anderen Stulpschienenende auf. Dies kann z.B. durch eine Befestigungsschraube erfolgen, die sowohl die Arretierplatte als auch die Stulpschienen durchdringen. Dazu ist es jedoch notwendig, daß die Treibstange des ablängbaren Treibstangenbeschlagteils gegenüber der Stulpschiene verkürzt abgetrennt wird, da ansonsten die Treibstange in ihrer Verschiebeendstellung gegen die Befestigungsschraube stößt. Dabei ist die Stulpschiene des zu kürzenden Treibstangenbeschlagteils bei dem Abtrennen zusätzlich mit einer Bohrung für die Befestigungsschraube zu versehen.

Die aus der EP 0 450 363 B1 bekannte Vorrichtung sieht hingegen vor, daß zwei versetzt hintereinanderliegende Trennmesser in einem Ständer des Werkzeuges geführt werden, denen ein gemeinsamer Widertageramboß zugeordnet ist. Der Arbeitshub des ersten Trennmessers entspricht dabei der Gesamtdicke von Stulpschiene und Treibstange während der Arbeitshub des zweiten Trennmessers nur der der Treibstange entspricht. Dadurch kann das Treibstangenbeschlagbauteil in die gemeinsame Öffnung des Werkzeuges eingeführt werden und es wird eine Spreizvorrichtung unnötig.

Bei einigen Treibstangenbeschlägen ist es jedoch notwendig, daß die Treibstangen über die Stulpschienen vorstehen. Die bislang verwendeten Vorrichtungen oder Werkzeuge können dazu nicht verwendet werden, da die Formschlußverbindung (z.B. die Bohrung zum Durchgriff der Befestigungsschraube) nicht ohne Umbau der Anordnung der Trennmesser beibehalten werden kann. Wird das Treibstangenbauteil nämlich umgedreht, so daß die Treibstange unterhalb der Stulpschiene liegt, muß die Formschlußverbindung an einer anderen Stelle erfolgen.

Der Erfindung liegt daher die Aufgabe zugrunde, eine Vorrichtung anzugeben, bei der in gewohnter Weise herkömmliche Treibstangenbeschläge verarbeitet werden können, die aber auch zur Durchtrennung von Treibstangenbeschlägen der zuletzt genannten Art gleichermaßen geeignet ist.

Die Aufgabe wird erfindungsgemäß dadurch gelöst, daß die Öffnung durch eine Spreizeinrichtung zum Trennen der Stangen oder Streifen voneinander in eine obere und in eine untere Öffnung getrennt wird und daß der Öffnung zum Einführen der Stangen oder Streifen eine zweite Öffnung mit Spreizeinrichtung gegenüberliegt, wobei die Trennmesser beim Einführen der Stangen oder Streifen in die zweite Öffnung in umgekehrter Reihenfolge auf die Stangen einwirken.

Durch die erste Öffnung kann ein Treibstangenbeschlag der herkömmlichen Art wie bereits bekannt abgetrennt werden. Die zweite Öffnung erlaubt hingegen die Verarbeitung von Treibstangenbeschlägen, die eine über die Stulpschiene vorstehende Treibstange aufweisen. Das Werkzeug läßt sich daher mit nur geringem Mehraufwand sowohl für bekannte als auch für neuere Treibstangenbeschläge verwenden, was die parallele Verarbeitung der Beschläge ermöglicht, aber auch eine größere Stückzahl der Vorrichtungen bei geringerer Variantenanzahl zur Folge hat.

Eine weitere vorteilhafte Ausgestaltung sieht vor, daß das zweite Trennmesser ausschließlich der unteren Öffnung zugeordnet ist. Dadurch kann die Steuerung der Trennmesser vereinfacht werden.

Eine weitere Vereinfachung sieht vor, daß das zweite Trennmesser eine Öffnung zum Passieren der in der oberen Öffnung der zweiten Öffnung eingeführten Stange hat. Dadurch kann der notwendige Hub der Trennmesser reduziert werden.

Weitere Ausführungsbeispiel der Erfindung sind in den Zeichnungen dargestellt.

Es zeigen:
- Fig. 1: den Stand der Technik der bislang verwendeten Vorrichtungen,
- Fig. 2: einen ersten und einen zweiten Treibstangenbeschlag herkömmlicher Art an einer Verbindungsstelle,
- Fig. 3: einen schematischen Aufbau eines geeigneten Werkzeuges sowie der damit herstellbaren Verbindungsstelle und dem entstehenden Abfallstück beim Zuführen in einer ersten Öffnung des Werkzeuges,
- Fig. 4: eine schematische Darstellung des Werkzeuges nach Fig. 3 beim Zuführen in einer zweiten Öffnung und
- Fig. 5 bis 7: unterschiedliche mit dem Werkzeug herstellbare Verbindungsstellen.

Eine heute übliche Koppelstelle, die mit einer Vorrichtung entsprechend der Fig. 1 hergestellt wurde, ist in der Fig. 2 dargestellt.

Dabei ist ein erster Treibstangenbeschlag 20 mit einer Stulpschiene 21 somit einer unter dieser längsverschieblich geführten Treibstange 22 versehen. Ein zweiter Treibstangenbeschlag 23 besteht ebenfalls aus einer Stulpschiene 24 und einer Treibstange 25.

Während die Treibstange 22 an ihrem Ende mit einem Kupplungsschuh 26 versehen ist, weist die Treibstange 25 eine seitliche Feinverzahnung 27 auf, die mit einer an dem Kupplungsschuh 26 angebrachten Verzahnung 28 verbindbar ist.

Ferner ist an der Stulpschiene 21 eine verschiebbare Arretierplatte 29 vorgesehen, die in der rechten Darstellung nach Fig. 2 den Spalt 30 zwischen den Stulpschienen 21, 24 abdeckt. Weiterhin ist aus der Fig. 2 erkennbar, daß die Treibstange 25 gegenüber der Stulpschiene 24 verkürzt ausgeführt ist, so daß die Stulpschiene 24 die Treibstange 25 um ein Maß 31 überragt. Ferner ist in der Stulpschiene 24 eine Bohrung 32 vorgesehen, die von dem Spalt 30 durch das Maß 33 beabstandet ist. Die Anordnung ist dabei so getroffen, daß nach dem Verschieben der Arretierplatte 29 in die in Fig. 2 dargestellte überlappende Lage eine Befestigungsschraube 34 eine Bohrung 35 der Arretierplatte 29 durchgreifen kann, wobei die Bohrung 35 mit der Bohrung 32 fluchtet.

Dabei ist wesentlich, daß die Treibstange 25 in ihrer Verschiebebewegung durch die Schraube 34 nicht behindert wird, da ansonsten der beispielsweise an dem ersten Treibstangenbeschlag 20 angeordnete Verriegelungszapfen 36 nicht in seiner vollen Wirklänge verfahren werden kann. Die linke Darstellung der Fig. 2 zeigt daher die Treibstange 25 in einer Verschiebeendstellung.

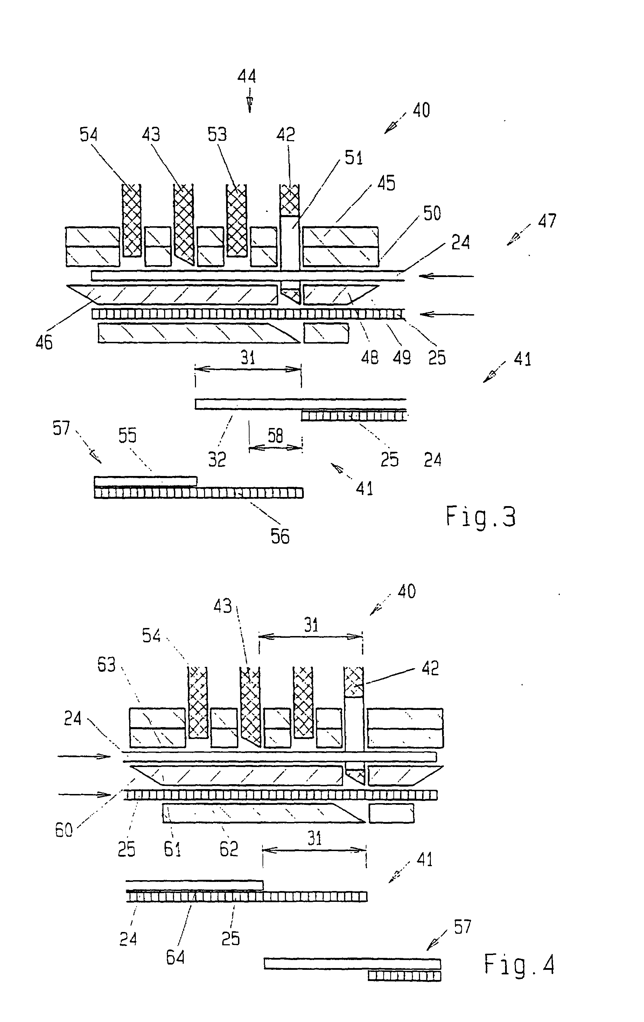

Fig. 3 zeigt den Einsatz des Werkzeuges 40 zur Erzeugung der Kupplungsstelle 41. Wie aus der schematischen Darstellung deutlich wird, sind mehrere Trennmesser 42, 43 normal zu ihrer Arbeitsrichtung 44 nebeneinander versetzt angeordnet. Die Trennmesser 42, 43 sind in ansich bekannter Weise unabhängig voneinander in einem Gestell 45 oder Ständer bewegbar. Ferner ist den Trennmessern 42, 43 ein gemeinsamer, ortsfester Widerlageramboss 46 zugeordnet. Die aneinander befestigten Stangen, hier die Treibstange 25 und die Stulpschiene 24 werden einer Öffnung 47 des Werkzeuges 40 zugeführt, wobei in der Öffnung 47 eine Spreizeinrichtung 48 vorgesehen ist, welche die Öffnung 47 in eine untere und eine obere Öffnung 49, 50 teilt. Das Trennmesser 42 ist überdies mit einer Öffnung 51 versehen, so daß die in die obere Öffnung 50 eingeschobene Stulpschiene 24 das Trennmesser 42 in der Öffnung 51 passieren kann. Das Trennmesser 42 ist dabei normal zu seiner Arbeitsrichtung 44 verschoben, so daß das Trennmesser 42 ausschließlich der unteren Öffnung 49 zugeordnet ist.

Ferner ist in dem Gestell 45 ein erster Lochstempel 53 sowie ein zweiter Lochstempel 54 vorgesehen, die beidseits des Trennmessers 43 angeordnet sind. Der Lochstempel 53 dient dabei zur Herstellung der in Fig. 2 dargestellten Bohrung 32 in der Stulpschiene 24. Die abgetrennten Stulpschienen - bzw. Treibstangenabschnitte 55, 56 werden als Abfall 57 abgetrennt. Hierbei ist deutlich zu erkennen, daß die Stulpschiene 24 die Treibstange 25 um das Maß 31 überragt, wobei ferner vorgesehen ist, daß die Treibstange 25 nach dem Abtrennen auch um ein Maß 58 von dem der Bohrung 32 entfernt ist, welches mindestens der Hälfte des Hubes der Treibstange 25 ausmacht.

In Fig. 4 ist das Werkzeug 40 ebenfalls dargestellt. Hiebei wird aber die Treibstange 25 bzw. die Stulpschiene 24 des Treibstangenbauteils einer zweiten Öffnung 60 zugeführt, die ebenfalls von einer Speizeinrichtung 61 in eine untere und obere Öffnung 62, 63 geteilt wird. Es ist leicht erkennbar, daß die um das Maß 31 versetzt angeordneten Trennmesser 42, 43 nun eine Verkürzung der Stulpschiene 24 gegenüber der Treibstange 25 bewirken, wobei gleichzeitig durch den Lochstempel 54 eine Bohrung 64 in der Stulpschiene 24 angebracht wird. Bei der so geschaffenen Kupplungsstelle 41 ist die Treibstange 25 daher um das Maß 31 gegenüber der Stulpschiene 24 verlängert ausgeführt.

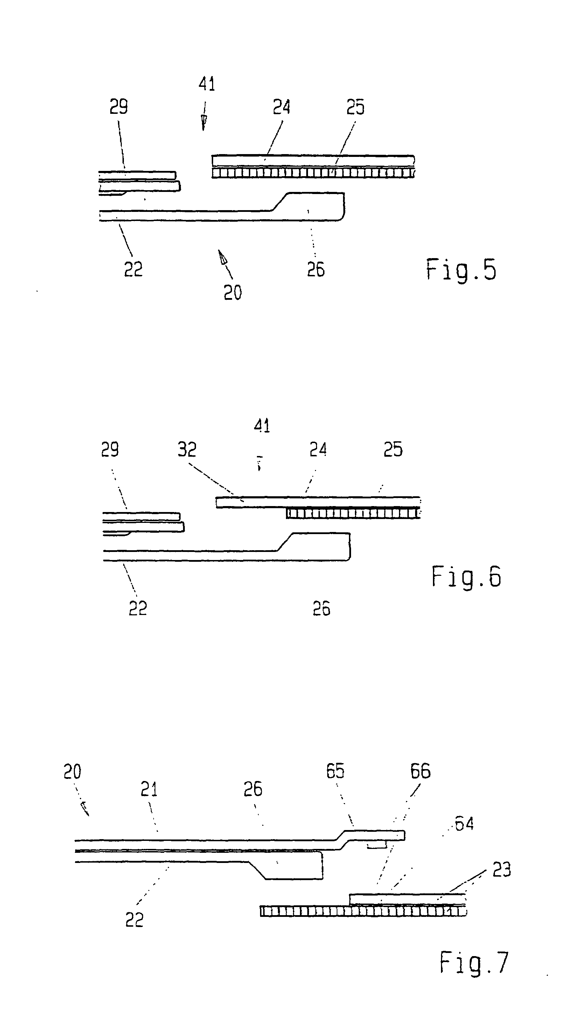

Die entsprechenden Kuppelstellen sind in den Fig. 5 bis 7 dargestellt.

Bei der Kupplungsstelle 41 nach Fig. 5 sind die Stulpschiene 24 und die Treibstange 25 bündig abgelängt. Dies kann beispielsweise dadurch bewirkt werden, daß Stulpschiene 24 und Treibstange 25 gemeinsam der unteren Öffnung 49 zugeordnet werden. Bei diesem Abtrennen ist jedoch keine Verkettung möglich, d.h. die Arretierplatte 29 des ersten Treibstangenbeschlages 20 kann nur formschlüssig über die Treibstange 24 greifen, nicht aber über eine Befestigungsschraube oder ähnliches mit der Stulpschiene 24 zusätzlich verbunden werden.

Bei dem in Fig. 6 dargestellten Ausgestaltung der Kupplungsstelle ist das Werkzeug 40 entsprechend der Fig. 3 zum Einsatz gekommen, so daß die Stulpschiene 24 gegenüber der Treibstange 25 verlängert ausgeführt ist. In der Stulpschiene 24 ist die Bohrung 32 vorgesehen, so daß eine in der Arretierplatte 29 vorgesehene Bohrung nach dem Verschieben der Arretierplatte 29 koaxial mit der Bohrung 32 liegt und von der Befestigungsschraube 34 durchdrungen werden kann.

Bei dem in Fig. 7 dargestellten Ausführungsbeispiel, welches beim Ablängen in der Vorrichtung 40 entsprechend der Fig. 4 entsteht, ist hingegen vorgesehen, daß der erste Treibstangenbeschlag 20 mit einer verlängerten Stulpschiene 21 versehen ist, die darüber hinaus einen abgekröpften Bereich 65 aufweist. An dem etwa um die Materialstärke der Stulpschiene 21 aufwärts gekröpften Bereich 65 ist eine Kupplungseinrichtung 66 vorgesehen, die im dargestellten Ausführungsbeispiel als vorspringender zylindrischer Abschnitt in einfacher Weise herstellbar ist. Die Treibstangen 22 ist entsprechend den Ausführungsbeispielen nach Fig. 5 und 6 gestaltet, allerdings ist der Kupplungsschuh 26 nicht in Richtung der Stulpschiene 21 geöffnet, sondern weist mit seinem offenen Abschnitt von dieser weg. Ein derartiger Treibstangenbeschlag wird beispielsweise eingesetzt, wenn das aus der DE 196 92 025 bekannte Verfahren zur Herstellung eines Flügelrahmens Anwendung findet. Das Verfahren, auf das hierbei vollinhaltlich Bezug genommen wird, gestattet es dabei die Montagenreihenfolge umzukehren und zuerst die in ihrer Länge anpaßbaren Treibstangenbeschläge 23 zu montieren und abschließend die in ihrer Länge nicht beeinflußbaren Treibstangenbeschläge 20 an den fertig gestellten Flügel anzuordnen.

Wie ferner aus der Fig. 7 deutlich wird, ist die Kupplungseinrichtung 66 ferner aus der bereit in Fig. 4 erwähnten Bohrung 64 bestehend, in die der in dem Bereich 65 angeordnete zylindrische Zapfen eingreift.

Die Vorrichtung bzw. das Werkzeug 40 eignet sich daher zur Schaffung der in den Fig. 5, 6 und 7 dargestellten Kupplungsstellen gleichermaßen.

### Bezugszeichenliste:

- A: Stanze
- B: Meßskala
- C: Schieber
- D: Anschlagkante
- E: Aufnahme
- F: Treibstangenbeschlagteil
- G: Ende
- H: Öffnung
- E: Werkzeug

- 20: Treibstangenbeschlag
- 21: Stulpschiene
- 22: Treibstange
- 23: Treibstangenbeschlag
- 24: Stulpschiene
- 25: Treibstange
- 26: Kupplungsschuh
- 27: Feinverzahnung
- 28: Feinverzahnung
- 29: Arretierplatte
- 30: Spalt
- 31: Maß
- 32: Bohrung
- 33: Maß
- 34: Befestigungsschraube
- 35: Bohrung
- 40: Werkzeug
- 41: Kupplungsstelle
- 42: Trennmesser
- 43: Trennmesser
- 44: Arbeitsrichtung
- 45: Gestell
- 46: Widerlageamboss
- 47: Öffnung
- 48: Spreizeinrichtung
- 49: untere Öffnung
- 50: obere Öffnung
- 51: Öffnung
- 53: Lochstempel
- 54: Lochstempel
- 55: Stulpschienenabschnitt
- 56: Treibstangenabschnitt
- 57: Abfall
- 58: Maß
- 60: Öffnung
- 61: Spreizeinrichtung
- 62: untere Öffnung
- 63: obere Öffnung
- 64: Bohrung
- 65: Bereich
- 66: Kupplungseinrichtung

## Patentansprüche

1. Vorrichtung zum Durchtrennen von zwei oder mehr aufeinanderliegenden Stangen oder Streifen, insbesondere Flach- oder Bandmaterial, vormontierten Bauten, oder Treibstangen und Stulpschienen von Treibstangenbeschlägen, an verschiedenen, ggf. gegeneinander längsversetzten Stellen,
wobei zwei normal zu ihrer Arbeitsrichtung gegeneinander versetzt angeordnete Trennmesser (42, 43) unabhängig voneinander in einem Gestell (45) bzw. Ständer geführt und auch getrennt von einander kraftantreibbar sind,
wobei den Trennmessern (42, 43) im Gestell (45) bzw. Ständer z. B. auf einem Tisch ein gemeinsamer, ortsfester Widerlageramboß (46) zugeordnet ist,
und wobei die Vorrichtung eine Öffnung (47) zum Einführen der Stangen oder Streifen (24,25) aufweist,
**dadurch gekennzeichnet,**
**daß** die Öffnung durch eine Spreizeinrichtung (48) zum Trennen der Stangen oder Streifen voneinander in eine obere (50) und in eine untere (49) Öffnung getrennt wird, und
**daß** der Öffnung (47) zum Einführen der Stangen oder Streifen (24,25) eine zweite Öffnung (60) mit Spreizeinrichtung (61) gegenüberliegt,
wobei die Trennmesser (42, 43) beim Einführen der Stangen oder Streifen in die zweite Öffnung (60) in umgekehrter Reihenfolge auf die Stangen einwirken.

2. Vorrichtung nach Anspruch 1,
**dadurch gekennzeichnet,**
**daß** das zweite Trennmesser (42) ausschließlich den unteren Öffnungen (49, 62) zugeordnet ist.

3. Vorrichtung nach Anspruch 2,
**dadurch gekennzeichnet,**
**daß** das zweite Trennmesser (42) eine Öffnung (51) zum Passieren der in der oberen Öffnung (50, 63) eingeführten Stange hat.

4. Vorrichtung nach einem der vorhergehenden Ansprüche,
**dadurch gekennzeichnet,**
**daß** die zwischen den Trennmessern (42, 43) ein Lochstempel angeordnet ist.

## Claims

1. A device for cutting two or more superposed rods or strips, particularly flat or strip material, pre-assembled structures or positioning bars and face plates of positioning-bar fittings, at variously optionally longitudinally offset places,
wherein two cutting blades (42, 43) offset from one another at right angles to their operating direction are independently guided in a frame or stand (45) and also separately powered,
wherein the blades (42, 43) in the frame or stand (45) are associated with a common stationary abutment or anvil (46), e.g. on a table, and
wherein the device comprises an opening (47) for inserting the rods or strips (24, 25), **characterised in that** the opening is divided into a top opening (50) and a bottom opening (49) by a spreading-apart device (48) in order to separate the rods or strips from one another and
the opening (47) for inserting the rods or strips (24, 25) is opposite a second opening (60) comprising a spreading-apart device (61),
wherein the blades (42, 43) operate in the reverse sequence on the rods when the rods or strips are inserted into the second opening (60).

2. A device according to claim 1, **characterised in that** the second blade (42) is associated exclusively with the bottom openings (49, 62).

3. A device according to claim 2, **characterised in that** the second blade (42) has an opening (51) for admitting the rod inserted into the top opening (50, 63).

4. A device according to any of the preceding claims, **characterised in that** a punch is disposed between the blades (42, 43).

## Revendications

1. Dispositif permettant de sectionner.deux ou plusieurs tiges ou bandes se trouvant les unes après les autres, et plus particulièrement des matériaux plats ou du feuillard, des pré-montages, des bielles et des rails de recouvrement de ferrures de bielles à différents endroits, voire à des endroits décalés longitudinalement l'un par rapport à l'autre, deux couteaux à découdre (42, 43) décalés l'un par rapport à l'autre perpendiculairement à leur direction de travail étant guidés indépendamment l'un de l'autre dans un cadre (45) ou support et pouvant être entraînés mécaniquement séparément l'un de l'autre, une enclume commune et fixe à contre-dépouille (46) ayant été raccordée aux couteaux à découdre (42, 43) dans le cadre (45) ou le support, par exemple sur une table,
et le dispositif présentant une ouverture (47) destinée à l'insertion des tiges ou bandes (24, 25), **caractérisé en ce que** l'ouverture est séparée en une ouverture supérieure (50) et inférieure (49) via une installation d'écartement destinée à séparer les tiges ou bandes les unes par rapport aux autres, et **en ce que** une deuxième ouverture (60) avec installation d'écartement (61) est opposée à l'ouverture (47) destinée à l'insertion des tiges ou bandes (24, 25), les couteaux à découdre (42, 43) agissant, lors de l'insertion des tiges ou bandes dans la deuxième ouverture (60), sur les tiges, dans le sens contraire à leur ordre de succession.

2. Dispositif selon la revendication 1,
**caractérisé en ce que** le deuxième couteau à découdre (42) est uniquement raccordé aux ouvertures inférieures (49, 62).

3. Dispositif selon la revendication 2,
**caractérisé en ce que**
le deuxième couteau à découdre (42) présente une ouverture (51) destinée au passage de la tige insérée dans l'ouverture supérieure (50, 63).

4. Dispositif selon une des revendications précédentes,
**caractérisé en ce que**
un poinçon est disposé entre les couteaux à découdre (42, 43).
